# EUROPÄISCHE PATENTSCHRIFT

(11) **EP 3 632 760 B1**
(45) Veröffentlichungstag und Bekanntmachung des Hinweises auf die Patenterteilung: **08.12.2021**
(21) Anmeldenummer: 18198832.0
(22) Anmeldetag: 05.10.2018
(51) Int. Cl.: B60T 17/22, F16D 66/00, F16D 121/22

(54) **PRÄVENTIVE FUNKTIONSKONTROLLE BEI EINER ELEKTROMAGNETISCHEN FEDERDRUCKBREMSE**
PREVENTIVE FUNCTION CONTROL FOR AN ELECTROMAGNETIC SPRING PRESSURE BRAKE
CONTRÔLE DE FONCTIONNEMENT PRÉVENTIF D'UN FREIN À PRESSION PAR RESSORT ÉLECTROMAGNÉTIQUE

(43) Veröffentlichungstag der Anmeldung: 08.04.2020
(73) Patentinhaber: Chr. Mayr GmbH + Co. KG, 87665 Mauerstetten (DE)
(72) Erfinder: Heumoos, Harald, 87463 Dietmannsried (DE); Kramkowski, Matthias, 86989 Steingaden (DE); Marten, Andreas, 87650 Baisweil (DE); Timmler, Frank, 86879 Wiedergeltingen (DE); Unsin, Karl, 86860 Beckstetten (DE)
(74) Vertreter: Ruschke, Hans Edvard

(56) Entgegenhaltungen:
- WO-A1-2009/024168
- JP-B2- 6 382 366
- US-A1- 2003 061 872

## Beschreibung

Die vorliegende Erfindung betrifft ein Verfahren zur präventiven Funktionskontrolle bei einer elektromagnetischen Federdruckbremse

Derartige Verfahren werden vorzugsweise im Bereich der Aufzugs-, Bühnen- und Hebetechnik verwendet.

Die DE 103 14 390 B4 offenbart ein Verfahren und Vorrichtung zum Überwachen einer elektromagnetisch betätigbaren Bremse mit einer ein Magnetfeld erzeugenden Spule und einer durch das Magnetfeld bewegbar angeordneten Ankerscheibe, bei dem das Magnetfeld durch Beaufschlagen der Spule mit einem Spulenstrom erzeugt wird und die Bewegung der Ankerscheibe durch Überwachen des Zeitverlaufs des Spulenstroms bestimmt wird, wobei aus dem Zeitverlauf des Spulenstroms ein Einschaltpunkt bestimmt wird, der für den Bewegungsbeginn der Ankerscheibe repräsentativ ist. Der Spulenstrom wird zum Einschaltpunkt mit einem vorbestimmten ersten Grenzwert verglichen, der für einen vorbestimmten ersten Verschleißzustand der Bremse repräsentativ ist, und wobei in Abhängigkeit vom Ergebnis dieses Vergleichs ein für den derzeitigen Verschleißzustand der Bremse repräsentatives Signal ausgegeben wird.

Die DE 10 2011 075 935 B4 offenbart ein Verfahren zur Ermittlung von Fehlerzuständen eines elektromagnetischen Aktors, wobei der Funktionszustand und / oder der Fehlerzustand anhand eines Vergleichs zumindest einer magnetischen Referenzkennlinie, welche einen verketteten magnetischen Soll-Fluss in Abhängigkeit einer Stromstärke beschreibt, und einer magnetischen Ist-Kennlinie, welche einen verketteten magnetischen Ist-Fluss in Abhängigkeit der Stromstärke beschreibt, ermittelt wird. Hierbei wird der verkettete magnetische Ist-Fluss einer Strom- und einer Spannungsmessung im Erzeugerkreis des Magnetfelds während des Betriebs des elektromagnetischen Aktors ermittelt. Außerdem wird eine für den elektromagnetischen Aktor gattungsspezifische oder chargenspezifische magnetische Kennlinie bestimmt, welche zur Bestimmung der magnetischen Referenzkennlinie mittels einer Kalibrierung an die spezifischen individuellen Eigenschaften des elektromagnetischen Aktors angepasst wird. Zur Ermittlung des verketteten magnetischen Soll-Flusses eines individuellen elektromagnetischen Aktors wird zunächst ein funktionsfähiger gattungsspezifischer elektromagnetischer Aktor ausgewählt und das chargenspezifische Verhalten in einem späteren Verfahrensschritt an Messwerten, welche an den tatsächlich verwendeten elektromagnetischen Aktoren gemessen werden, unter Mittelwertbildung angepasst. Hiermit werden individuelle elektromagnetische oder mechanische Eigenschaften des elektromagnetischen Aktors in die magnetische Referenzkennlinie inkorporiert.

Die US 2003 061872 A1 offenbart ein Verfahren zum Erfassen von Verschleiß in einer reibschlüssigen Kupplung oder einer reibschlüssigen Bremse, wobei die Kupplung oder die Bremse mindestens eine elektrisch erregbare Spule und mindestens ein um die Achse drehbewegliches Element aufweist, um einen Reibschluss mit mindestens einem entsprechenden Gegenstück zu bewirken, wobei mindestens das drehbewegliche Element oder das entsprechende Gegenstück axial beweglich ist und es ermöglich wird einen Luftspalt auszubilden. Der Verschleiß ist dadurch bestimmbar, dass der elektrische Strom von der elektrisch erregbaren Spule gemessen, ausgewertet und die Auswertung mit einem Referenzwert verglichen wird.

Die WO 2009/024168 A1 offenbart eine Vorrichtung zum Überwachen einer elektromagnetischen Bremse, mit einer Bremsüberwachungsvorrichtung, die an eine elektrische Versorgung für eine elektromagnetische Bremse mit einer Bremseinrichtung gekoppelt werden kann und eine elektrische Spule mit sich ändernden Induktivitäten umfasst. Die Bremsüberwachungsvorrichtung ist so ausgelegt ist, dass diese den Verlauf eines elektrischen Stroms mit der Zeit überwacht, der der elektromagnetischen Bremse zur Betätigung der Bremseinrichtung zugeführt wird. Sie erfasst die Bewegung oder ein Status der Bremseinrichtung unter Verwendung des überwachten Verlaufs des elektrischen Stroms.

Die JP6382366 B1 offenbart eine elektromagnetische Bremseinrichtung und ein dafür ausgelegte Steuerungsverfahren, dass eine Meldung über einen Fehler im Betrieb des Ankers ausgibt bevor es zu einem Ausfall kommt. Das Steuerungsverfahren bestimmt eine Differenz zwischen dem Wert eines durch die elektromagnetische Spule fließenden elektrischen Stroms und einem vorbestimmten theoretischen Wert, wenn der bestimmte Wert der Differenz gleich oder größer als ein vorbestimmter Sollwert ist wird ein Signal ausgegeben, dass der Betrieb des Ankers fehlerhaft ist.

Die Aufgabenstellung der vorliegenden Erfindung wird demgegenüber darin gesehen in einem einfacheren alternativen Verfahren eine genauere präventive Funktionskontrolle einer Federdruckbremse bereitzustellen.

Diese Aufgabe wird erfindungsgemäß gelöst indem eine elektromagnetische Federdruckbremse, die mindestens eine Spule umfasst, sowie eine Ankerscheibe, einen Spulenträger mit hierauf verteilten Druckfedern, ein Ansteuerungsmodul, und ein Überwachungsmodul mit mindestens einem Halbleiterbauelement, einem Strommessgerät, und einem Spannungsmessgerät, die nachfolgenden Verfahrensschritte durchläuft. Zunächst wird die Federdruckbremse mit einer Spannung durch das Ansteuerungsmodul angesteuert. Dann werden durch das Überwachungsmodul die Zustandsgrößen Strom (I) und Spannung (U) an der elektromagnetischen Federdruckbremse gemessen. Im weiteren Verlauf wird eine Bestimmungsgröße (T; F) der elektromagnetischen Federdruckbremse durch das Überwachungsmodul bestimmt. Diese Bestimmungsgröße (T; F) wird über einen Bereich (a) summiert, der sich vom Startpunkt der Ansteuerung (12) bis zu einem Punkt (W) erstreckt, an dem sich die Ankerscheibe zu bewegen beginnt. Am Punkt (W) wird ein Stromwert erfasst an dem die Bewegung der Ankerscheibe beginnt. Die Bestimmungsgröße (T; F) wird darüber hinaus über einem Bereich (b) summiert, der sich vom Punkt der Ansteuerung, wenn der Strom (I) wieder den oben erfassten Wert erreicht, bis zu dem Punkt erstreckt, an den ein konstanter Strom erreicht wird. Im weiteren Verlauf wird ein Verhältnis (X) aus der Summe der Bestimmungsgröße über den Bereich (a) zur Summe der Bestimmungsgröße über den Bereich (a) und (b) berechnet. Bei Erreichen oder Überschreiten eines vorgegebenen Werts (Y) durch den Wert des Verhältnisses (X) wird ein Zustandssignal betreffend eines kritischen Betriebszustandes der Federdruckbremse ausgegeben.

In einer bevorzugten Ausführungsform ist die Bestimmungsgröße (T) die Zeit. In einer alternativen Ausführungsform ist die Bestimmungsgröße (F) der verkettete Fluss.

In einer bevorzugten Ausführungsform wird der Punkt (W), an dem sich die Ankerscheibe zu bewegen beginnt, durch die folgenden Verfahrensschritte bestimmt. Zunächst werden die Zustandsgrößen Strom (I) und / oder Spannung (U) an der elektromagnetischen Federdruckbremse durch das Überwachungsmodul gemessen. Im Anschluss daran werden eine weiteren Zustandsgröße aus der gemessenen Zustandsgröße Strom (I), Spannung (U) und aus dem Widerstandswert der Spule (Rs) oder aus einer aus der gemessenen Zustandsgröße Strom (I), Spannung (U) hergeleiteten Größe und aus dem Widerstandswert der Spule (Rs) berechnet und dann die weitere Zustandsgröße mit einem im Überwachungsmodul für die Bewegung der Ankerscheibe in der Federdruckbremse hinterlegten vordefinierten Wert/Verlauf dieser weiteren Zustandsgröße verglichen. Im Anschluss wird der Stromwert am Punkt (W), an dem die Bewegung der Ankerscheibe beginnt, bestimmt und ausgegeben.

In einer bevorzugten Ausführungsform ist die aus der gemessenen Zustandsgröße hergeleitete Größe der synchronisierte gleitende Mittelwert der gemessenen Zustandsgröße Strom (I) und Spannung (U).

Weiterhin ist in einer bevorzugten Ausführungsform die weitere Zustandsgröße die Induktivität (L). In einer alternativen Ausführungsform ist die weitere Zustandsgröße die Änderung der Induktivität (dL/dt). In einer weiteren alternativen Ausführungsform ist die weitere Zustandsgröße die induzierte Spannung (U_{ind})

In einer bevorzugten Ausführungsform wird die elektromagnetische Federdruckbremse durch das Ansteuerungsmodul mit einer Gleichspannung angesteuert. In einer alternativen Ausführungsform wird die elektromagnetische Federdruckbremse durch das Ansteuerungsmodul mit einer pulsierenden Gleichspannung angesteuert.

In einer Ausführungsform liegt der Wert (Y), der einen Grenzwert für den Zustand der Federdruckbremse definiert, bei 50% -80%. In einer alternativen Ausführungsform liegt der Wert (Y) bei 80%-90 %. In einer weiteren alternativen Ausführungsform liegt der Wert (Y) bei 90%-99%.

Vorteilhaft an der Erfindung gegenüber dem Stand der Technik ist, dass der Grad des Verschleißes der Federdruckbremse durch die präventive Funktionskontrolle genauer angegeben werden kann als bei bisher bekannten Verfahren, da aufgrund der Bildung eines Verhältnisses aus den zwei Bereichen ein Maß für die verbleibende Reserve in der Bremse angegeben werden kann.

Weiterhin vorteilhaft bei der Bestimmung des Verschleißes mittels des magnetischen Flusses ist, dass dieser in Sättigung geht und dann nicht weiter ansteigt, während der Stromwert weiterhin zunimmt und somit der Grad des Verschleißes genauer bestimmt werden kann.

Darüber hinaus können im Dauerbetrieb einer Federdruckbremse weitere sich abzeichnende kritische Betriebszustände erkannt werden, wie das Erhitzen einer Federdruckbremse, Spannungsschwankungen, Spannungseinbrüche oder ein Betrieb in Spannungsabsenkung und damit einhergehende Veränderungen im Verlauf der Zustandsgrößen Strom und Spannungen.

Des Weiteren ist von Vorteil, dass ein stetiger Informationsfluss zwischen der Federdruckbremse und einer internen oder externen Ansteuerung der Federdruckbremse möglich ist.

Weitere vorteilhafte Details der Erfindung ergeben sich aus den Unteransprüchen sowie aus der Beschreibung und den nachstehend genannten Zeichnungen. Hierbei ist zu beachten, dass die erwähnten Merkmale jeweils einzeln für sich oder in beliebiger Kombination erfindungswesentlich sein können.

### Figurenbeschreibung

Fig. 1 zeigt in einer Blockstruktur die physikalischen Umwandlungsprozesse, die während des Betriebs einer elektromagnetischen Federdruckbremse ablaufen.
Fig. 2 zeigt die gemessenen Zustandsgrößen Strom (I) und Spannung (U) beim Einschalten (Lüften) einer elektromagnetischen Federdruckbremse mit einer Gleichspannung.
Fig. 3 zeigt die gemessenen Zustandsgrößen Strom (I) und Spannung (U) beim Einschalten (Lüften) einer elektromagnetischen Federdruckbremse mit einer pulsierenden Gleichspannung.
Fig. 4 zeigt den Verlauf des verketteten Flusses gegenüber dem an der Federdruckbremse abfallenden Strom während eines Einschaltvorgangs einer elektromagnetischen Federdruckbremse.
Fig. 5 zeigt den Verlauf des an der Federdruckbremse abfallenden Stroms gegenüber der Zeit während eines Einschaltvorgangs einer elektromagnetischen Federdruckbremse.
Fig. 6 zeigt den Verlauf der Induktivität während eines Einschaltvorgangs einer elektromagnetischen Federdruckbremse mit pulsierender Gleichspannung.
Fig. 7 zeigt den Verlauf der Änderung der Induktivität während eines Einschaltvorgangs einer elektromagnetischen Federdruckbremse mit pulsierender Gleichspannung.

### Ausführliche Beschreibung

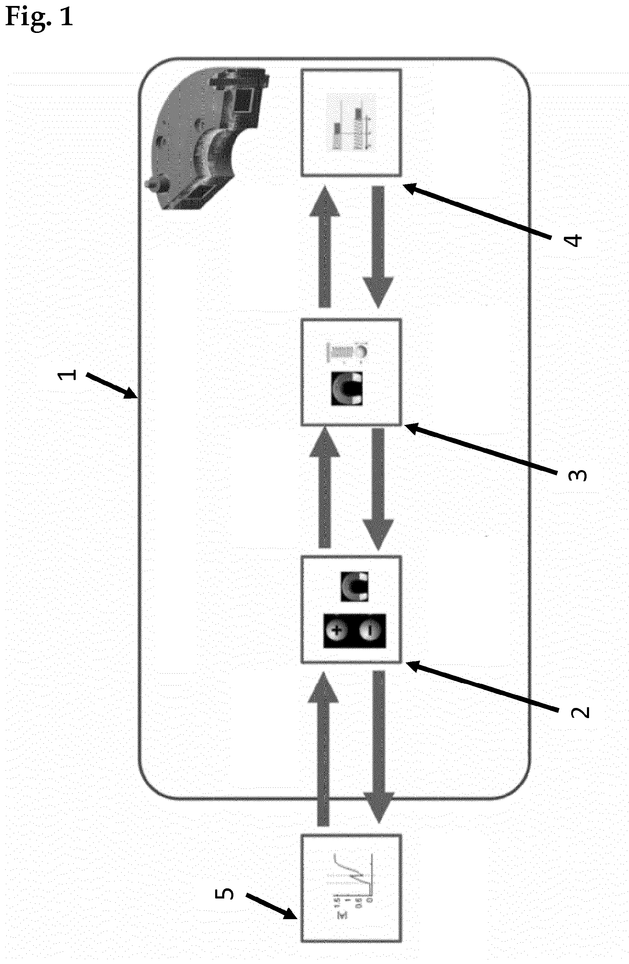

In Fig. 1 wird die mindestens eine elektromagnetische Federdruckbremse als Blockstruktur (1) dargestellt, wobei die Bewegung der Ankerscheibe in der Federdruckbremse als Ablauf von verschiedenen physikalischen Umwandlungsprozessen (2, 3, 4) der Energie beschrieben werden kann. Die genannten physikalischen Umwandlungsprozesse (2, 3, 4) werden im Weiteren genauer ausgeführt und werden in einem Überwachungsmodul als modellbasierte Beschreibung der Ankerscheibenbewegung in der Federdruckbremse hinterlegt.

Die zugeführte elektrische Energie (5) in Form von Gleichspannung oder pulsierender Gleichspannung aus einer elektrischen Energiequelle wird im Betrieb der Federdruckbremse mehreren energetischen Umwandlungsprozessen ausgesetzt. Die Bremse als elektromagnetischer Aktor ist hierbei zu Beginn als elektromagnetischer Energiewandler (2) beschreibbar. Die elektrische Energie erfährt eine Umwandlung von elektrischer Energie in magnetische Energie (3) und gleichzeitig eine Umwandlung von potentieller Energie in kinetische Energie (4). Hierbei wirkt sich die Umwandlung von potentieller Energie in kinetische Energie im elektromagnetischen Aktor durch eine Bewegung (Lüften) der Ankerscheibe zum Spulenträger hin aus. Gleichzeitig mit dem Lüften der Ankerscheibe finden weitere Energieumwandlungen statt. Bei der Bewegung der Ankerscheibe wird die kinetische Energie in potentielle Energie umgewandelt, wobei diese Umwandlung mit dem Erreichen der geöffneten Position der Ankerscheibe endet. Gleichzeitig erfolgt eine magneto-mechanische Energie-Umwandlung (3), sodass im letzten Umwandlungsschritt die ursprünglich elektrische Energie im Masse Feder-System der Federdruckbremse gespeichert ist. Beim Schließen der Bremse, also der Bewegung der Ankerscheibe von geöffneter zur geschlossenen Position, finden wiederum die beschriebenen physikalischen Umwandlungsprozesse statt.

Diese sind hierbei nicht rückwirkungsfrei und bilden sich in der modellbasierten Beschreibung der Ankerscheibenbewegung ab. Die modellbasierte Beschreibung umfasst vordefinierte Werte, die der Bewegung der Ankerscheibe in der Federdruckbremse entsprechen.

In der modellbasierten Beschreibung sind die Werte und der Verlauf von Zustandsgrößen wie Strom (I) oder Spannung (U) oder aus den Zustandsgrößen abgeleitete Größen wie insbesondere Induktivität, Änderung der Induktivität oder der induzierten Spannung enthalten. Die verschiedenen vordefinierten Werte aus der modellbasierten Beschreibung der Ankerscheibenbewegung in einer Federdruckbremse stehen in Verbindung mit verschiedenen Betriebszuständen einer elektromagnetischen Federdruckbremse.

Im Folgenden werden verschiedene Betriebszustände einer Federdruckbremse beschrieben. Zu Beginn des Betriebs bzw. zum Öffnen einer elektromagnetischen Federdruckbremse wird diese eingeschaltet, d.h. mit einer Spannung (pulsierende Gleich- oder Gleichspannung) versorgt. In Folge einer ausreichenden Spannungsversorgung bewegt sich die Ankerscheibe von einer geschlossenen (abgefallenen) Position in eine geöffnete (gelüftete) Position. Die Federdruckbremse befindet sich dann in einem geöffneten Betriebszustand. Zum Ende des Betriebs bzw. beim Schließen (Bremsen) einer elektromagnetischen Federdruckbremse wird die Spannungsversorgung unterbrochen, d.h. die Federdruckbremse wird nicht oder nicht ausreichend mit einer Spannung (Wechsel- oder Gleichspannung) versorgt. In Folge einer fehlenden oder nicht ausreichenden Spannungsversorgung bewegt sich die Ankerscheibe von der geöffneten Position in die geschlossene Position. Die Federdruckbremse befindet sich dann in einem geschlossenen Betriebszustand.

Darüber hinaus kann die Federdruckbremse insbesondere bei gedämpften Federdruckbremsen den Betriebszustand des teilweisen Absenkens umfassen. Hierbei wird die Ankerscheibe soweit mit einer Spannung versorgt, dass sich die Ankerscheibe innerhalb der Federdruckbremse langsam zwischen der geöffneten und der geschlossen Position bewegt. Je nach Versorgung mit Spannung erfolgt eine langsam ansteigende oder abfallende Bewegung der Ankerscheibe.

In einem Überwachungsmodul ist die modellbasierte Beschreibung der Bewegung der Ankerscheibe in Verbindung mit den möglichen Betriebszuständen der Federdruckbremse hinterlegt. Das Überwachungsmodul umfasst mindestens ein Halbleiterbauelement, insbesondere einen Mikroprozessor, und mindestens ein Strommessgerät und / oder ein Spannungsmessgerät.

Durch ein Ansteuerungsmodul, welches mit der mindestens einen Federdruckbremse und dem Überwachungsmodul verbunden ist, kann der Federdruckbremse ein Betriebszustand vorgegeben und mit der dem Betriebszustand entsprechenden Spannung versorgt werden.

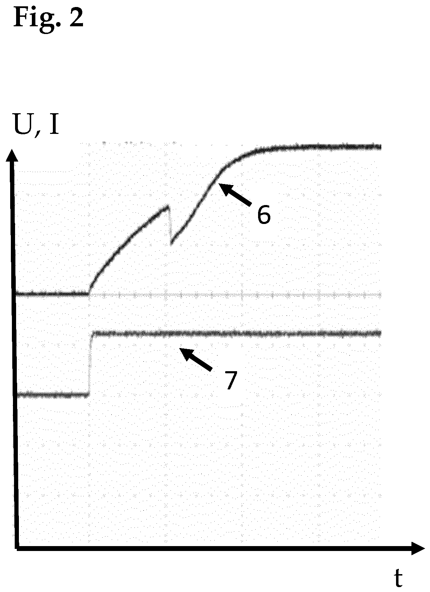

Fig. 2. zeigt einen beispielhaften Strom- (6) und Spannungsverlauf (7) beim Einschalten einer elektromagnetischen Federdruckbremse mit einer Gleichspannung. Hierbei wird die Federdruckbremse über ein Ansteuerungsmodul mit einer Spannung angesteuert und ein zu erreichender Betriebszustand kann vorgegeben werden, in diesem Fall ein offener Betriebszustand. In der Folge des Anlegens einer passenden Gleichspannung an die mindestens eine Federdruckbremse baut sich der Strom entsprechend einer exponentiellen Funktion auf. Sobald die oben beschriebenen physikalischen Umwandlungsprozesse der elektrischen Energie soweit fortgeschritten sind, dass sich die Ankerscheibe auf den Spulenträger zu bewegt, bildet sich diese Bewegung auch insbesondere in der Zustandsgröße Strom (6) ab. Wie in Fig. 2 dargestellt, bewirkt die Bewegung der Ankerscheibe im Verlauf der Zustandsgrößen Strom (6) einen charakteristischen Abfall. Im Anschluss an diesen charakteristischen Abfall steigt der Strom während der Bewegung der Ankerscheibe wieder der exponentiellen Funktion des induktiven Einschaltvorgangs folgend an, bis er nach Erreichen des geöffneten Betriebszustands einen konstanten Stromwert erreicht.

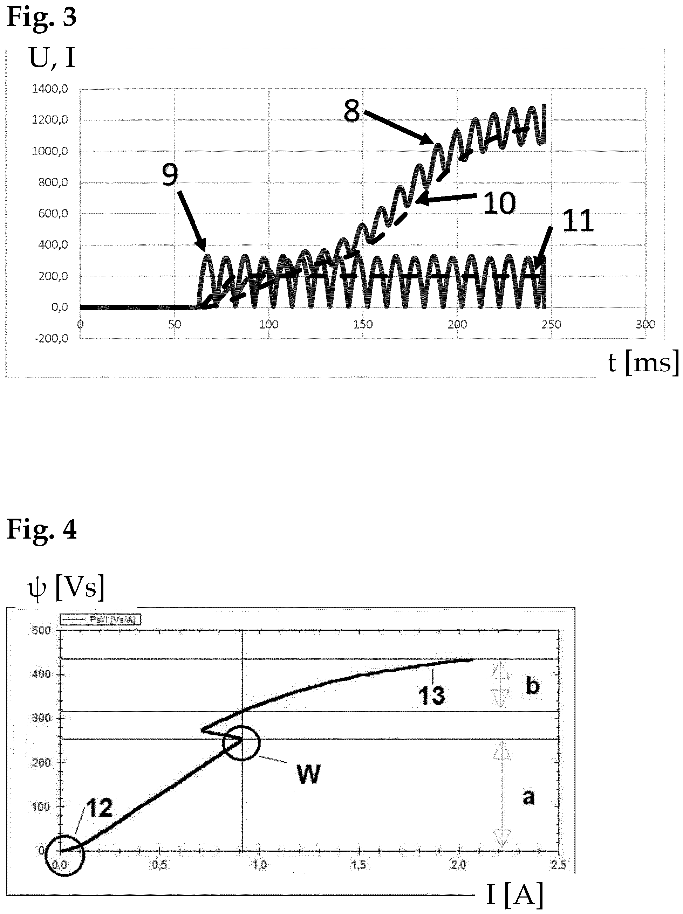

Fig. 3 zeigt einen beispielhaften Strom- (8) und Spannungsverlauf (9) beim Einschalten einer elektromagnetischen Federdruckbremse an (Netz-) Wechselspannung mit einem Brückengleichrichter. Hierbei zeigt der Spannungsverlauf (9) eine pulsierende Gleichspannung und der Stromverlauf (8) zeigt einen ansteigenden Verlauf, wobei dieser Verlauf von einer Wellenstruktur überlagert wird. Darüber hinaus ist in Fig. 3 als hergeleitete Größe der synchronisierte gleitende Mittelwert für die gemessenen Zustandsgrößen Strom (10) und Spannung (11) dargestellt. Synchronisierter gleitender Mittelwert bedeutet in diesem Zusammenhang, dass der die Länge des gleitenden Mittelwertes der gemessenen Strom- und Spannungswerte auf ein ganzzahliges Vielfaches der vor Ort gängigen halben Periodendauer der Netzfrequenz der Eingangsspannung festgelegt und synchronisiert wird. Insbesondere werden die gleitenden Mittelwerte auf die gängigen Netzfrequenzen 50 Hz oder 60 Hz synchronisiert. Darüber hinaus können alternativ gleichwertige Filterverfahren höherer Ordnung statt des synchronisierten gleitenden Mittelwertes angewendet werden.

In Fig. 4 ist der Verlauf des verketteten Flusses (13) gegen den an der Bremse anliegenden Strom aufgetragen, und zwar für die Ansteuerung (12) der Federdruckbremse mit einer Gleichspannung, wie sie in Fig. 2 dargestellt ist. Hierbei nimmt der verkettete Fluss vom Startpunkt der Ansteuerung mit größer werdendem Strom stetig zu. Diese stetige Zunahme des verketteten Flusses mit zunehmendem Strom (I) bleibt bis zu einem Punkt (W) erhalten, an dem die Bewegung der Ankerscheibe innerhalb der Federdruckbremse beginnt. Diesem Punkt (W) kann jeweils ein Stromwert zugeordnet werden, der durch das Überwachungsmodul gemessen wird. Im Anschluss an den Beginn der Bewegung der Ankerscheibe in der elektromagnetischen Federdruckbremse fällt der Strom deutlich ab, wobei der verkettete Fluss weiterhin zunimmt. Im weiteren Verlauf der Bewegung der Ankerscheibe nimmt der Strom bei weiterhin zunehmendem verkettetem Fluss wieder zu und erreicht wieder den bei Punkt (W) gemessenen Stromwert. Im Anschluss daran nimmt der verkettete Fluss gemeinsam mit dem Strom stetig zu, bis zu einem konstanten Wert des Stroms. Der magnetische Fluss geht hierbei in Sättigung, was bedeutet, dass trotz weiterer Zunahme des Stroms der verkettete Fluss nahezu konstant bleibt. Hierbei ergibt sich der zu erreichende konstante Stromwert aus der angelegten Spannung und dem Widerstand (Rs) der Spule. Zur Bestimmung der Funktionsfähigkeit der Federdruckbremse wird nun in einem Bereich (a) und einem Bereich (b) über die Bestimmungsgröße verketteter Fluss (F) summiert. Für den Bereich (a) wird vom Startpunkt der Ansteuerung bis zu einem Punkt (W), an dem sich die Ankerscheibe bewegt, summiert. Hierbei wird am Punkt (W) der zugehörige Stromwert, an dem die Bewegung der Ankerscheibe beginnt, vom Überwachungsmodul erfasst.

Für den Bereich (b) wird über die Bestimmungsgröße verketteter Fluss summiert, und zwar von dem Punkt der Ansteuerung an, von dem der Stromwert nach der Bewegung der Ankerscheibe wieder den Stromwert von Punkt (W) erreicht, bis zu dem Punkt, an dem ein konstanter Strom erreicht wird.

Im Anschluss an die Summierung der Bestimmungsgröße verketteter Fluss über die oben definierten Bereiche wird ein Verhältnis (X) aus der Summe der Bestimmungsgröße verketteter Fluss im Bereich (a) zur Summe der Bestimmungsgröße verketteter Fluss über die Bereiche (a) und (b) berechnet. Das Verhältnis (X) gibt Auskunft darüber, wie groß die Reserve des verketteten Flusses für den Betrieb der Bremse ist. In Abhängigkeit von der jeweilig verwendeten Bremsenart, insbesondere gedämpfte oder ungedämpfte Bremse bzw. abhängig von der Bremsengröße, ist im Überwachungsmodul ein Wert (Y) hinterlegt, wobei beim Erreichen oder Überschreiten dieses Werts (Y) durch den Wert des Verhältnisses (X) ein Zustandssignal ausgegeben wird. Dieses Zustandssignal gibt an, dass der Grenzwert für den Verschleiß der Bremse erreicht bzw. überschritten ist und / oder gegebenenfalls zeitnah eine Wartung oder ein Austausch der Federdruckbremse durchgeführt werden sollte. Dieses hier vorgestellte Verfahren ist entsprechend auch für die Ansteuerung einer Federdruckbremse mit einer pulsierenden Gleichspannung anwendbar.

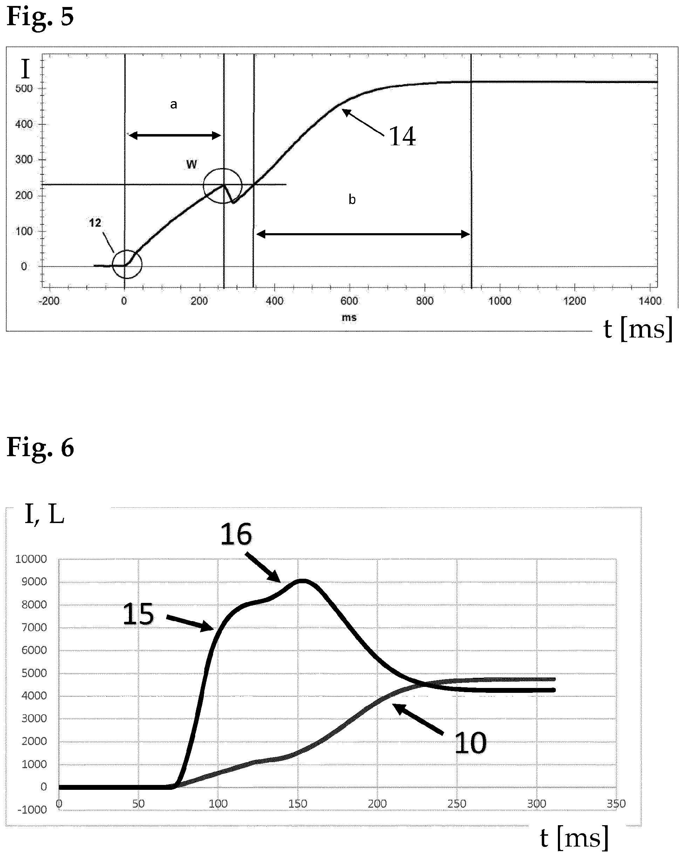

In Fig.5 ist der Verlauf des Stroms (14) gegenüber der Zeit beim Einschaltvorgang einer Federdruckbremse aufgetragen, und zwar für die Ansteuerung der Federdruckbremse mit einer Gleichspannung wie sie in Fig. 2 dargestellt ist. Hierbei nimmt der Strom (I) vom Startpunkt der Ansteuerung mit zunehmender Zeit stetig zu. Diese stetige Zunahme des Stroms mit zunehmender Zeit bleibt bis zu einem Punkt (W) erhalten, an dem die Bewegung der Ankerscheibe innerhalb der Federdruckbremse beginnt. Diesem Punkt (W) kann jeweils ein Stromwert zugeordnet werden, der durch das Überwachungsmodul gemessen wird. Im Anschluss an den Beginn der Bewegung der Ankerscheibe in der elektromagnetischen Federdruckbremse fällt der Strom mit fortschreitender Zeit deutlich ab. Im weiteren zeitlichen Verlauf der Ankerscheibenbewegung nimmt der Strom wieder zu und erreicht wieder den beim Punkt (W) bestimmten Stromwert. Im weiteren zeitlichen Verlauf nimmt der Strom stetig zu, bis zu einem konstanten Wert des Stroms. Hierbei ergibt sich der zu erreichende konstante Stromwert aus der angelegten Spannung und dem Widerstand (Rs) der Spule.

Zur Bestimmung der Funktionsfähigkeit der Federdruckbremse wird nun in einem Bereich (a) und einem Bereich (b) über die Bestimmungsgröße Zeit (T) summiert. Für den Bereich (a) wird vom Startpunkt der Ansteuerung (12) bis zum Punkt (W) summiert, an dem sich die Ankerscheibe bewegt. Hierbei wird an dem Punkt (W) der zugehörige Stromwert erfasst, an dem die Bewegung der Ankerscheibe beginnt. Für den Bereich (b) wird über die Bestimmungsgröße Zeit summiert, und zwar von dem Punkt der Ansteuerung an, von dem der Stromwert nach der Bewegung der Ankerscheibe wieder den Stromwert von Punkt (W) erreicht bis zu dem Punkt, an dem ein konstanter Strom erreicht wird.

Im Anschluss an die Summierung der Bestimmungsgröße Zeit über die oben definierten Bereiche (a) und (b) wird ein Verhältnis (X) aus der Summe der Zeit im Bereich (a) zur Summe der Bestimmungsgröße Zeit über die Bereiche (a) und (b) berechnet. Das Verhältnis (X) gibt Auskunft über die verbleibende Reserve zum Lüften der Federdruckbremse. In Abhängigkeit von der jeweilig verwendeten Bremsenart, insbesondere gedämpfte oder ungedämpfte Bremse bzw. abhängig von der Bremsengruppe, ist im Überwachungsmodul ein Wert (Y) hinterlegt, wobei beim Erreichen oder Überschreiten dieses Werts (Y) durch den Wert des Verhältnisses (X) ein Zustandssignal ausgegeben wird. Dieses Zustandssignal gibt an, dass der Grenzwert für den kritischen Betriebszustand der Bremse erreicht bzw. überschritten und / oder gegebenenfalls zeitnah eine Wartung oder eine Ersetzung der Federdruckbremse durchgeführt werden sollte. Dieses hier vorgestellte Verfahren ist entsprechend auch für die Ansteuerung einer Federdruckbremse mit einer pulsierenden Gleichspannung anwendbar.

In Fig. 6 ist beispielhaft der Verlauf der Induktivität (15) bei einer Bewegung der Ankerscheibe bei einem Einschaltvorgang mit pulsierender Gleichspannung gemäß Fig. 3 dargestellt. In einer ersten Ausführungsform ist der Beginn der Bewegung der Ankerscheibe anhand des Verlaufs der Induktivität bestimmbar. Hierbei ist aus dem synchronisierten gleitenden Mittelwert von Strom und Spannung und aus dem Widerstandswert (Rs) der Spule die Induktivität berechnet worden.

Direkt nach dem Einschalten nimmt die Induktivität (L) zunächst stark zu, wobei die Induktivität danach nahezu ein Plateau erreicht. Während dieses Plateaus schreiten die oben beschriebenen physikalischen Umwandlungsprozesse der elektrischen Energie so weit voran, dass die Bewegung der Ankerscheibe vom geschlossenen zum geöffneten Zustand im Verlauf der Induktivität anhand der erneuten Zunahme der Induktivität (16) erkennbar ist. Im Anschluss an diesen erneuten Anstieg der Induktivität nimmt die Induktivität (15) im weiteren Verlauf auf einen nahezu konstanten Wert ab. Vorzugsweise kann zur Berechnung der Induktivität (L) der verkettete magnetische Fluss Ψ = ∑ U_{IND} bestimmt werden. Die Bremse ist hierbei als Reihenschaltung aus Induktivität und ohmschen Widerstandes zu betrachten, wobei die durch die angelegte Spannung U induzierte Spannung U_{IND} durch den am ohmschen Widerstand der Spule abfallenden Spannungswert U_{RS} reduziert wird, sodass die induzierte Spannung U_{IND.} = U - U_{RS} ist. Hierbei ist die abfallende Spannung U_{RS}= I · R, wobei R_{RS} der Widerstandswert (Rs) der Spule ist. Die Induktivität L ergibt sich dann aus dem Zusammenhang L = Ψ/I. Dieses hier vorgestellte Verfahren ist entsprechend auch für die Ansteuerung einer Federdruckbremse mit einer Gleichspannung anwendbar. In einer weiteren Ausführungsform der Erfindung kann der Beginn der Bewegung der Ankerscheibe anhand der Änderung der Induktivität (dL / dt) bestimmt werden.

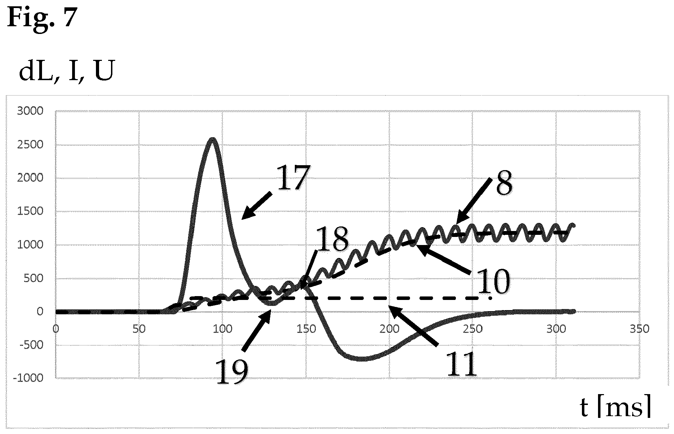

Fig. 7. zeigt die Änderung der Induktivität als Ableitung nach der Zeit (17) aus dem Verlauf der Induktivität aus Fig. 6. In der Folge des Anlegens der (Netz-) Wechselspannung steigt die Änderung der Induktivität (dL / dt) schnell auf einen maximal positiven Wert (globales Maximum), um im Anschluss daran wieder abzufallen. Während dieses Abfalls schreiten die oben beschriebenen physikalischen Umwandlungsprozesse der elektrischen Energie so weit voran, dass sich die Ankerscheibe zum Spulenträger hin bewegt. Hierbei ist der Beginn der Bewegung der Ankerscheibe dem Wendepunkt (19) im Verlauf der Änderung der Induktivität zuzuordnen. Dieser Wendepunkt entspricht dem Punkt (W) im Verlauf der Fig. 4 und 5. Diesem Wendepunkt (19) kann ein Stromwert zugeordnet werden, der im oben beschriebenen Verfahren verwendet wird, um eine präventive Funktionskontrolle der Bremse durchführen zu können. Die Bewegung der Ankerscheibe bildet sich im weiteren Verlauf der Änderung der Induktivität (dL / dt) (17) durch einen Anstieg ab. Dieses lokale Maximum (18) gibt die Bewegung der Ankerscheibe wieder. Im Anschluss daran fällt die Änderung der Induktivität während der Bewegung der Ankerscheibe ab, um im Anschluss auf einen konstanten Wert zu verbleiben. Dieses hier vorgestellte Verfahren zur Bestimmung des Stromwerts am Beginn der Bewegung der Ankerscheibe ist entsprechend auch für die Ansteuerung einer Federdruckbremse mit einer Gleichspannung anwendbar.

### Bezugszeichenliste

- 1.: Federdruckbremse als Blockstruktur
- 2.: Elektro-magnetischer Energiewandler
- 3.: Magneto-mechanischer Energiewandler
- 4.: Potentielle und kinetische Energie
- 5.: Energiequelle
- 6.: Stromverlauf - Gleichspannung-Einschalten
- 7.: Spannungsverlauf-Gleichspannung- Einschalten
- 8.: Stromverlauf-pulsierende Gleichspannung-Einschalten
- 9.: Spannungsverlauf- pulsierende Gleichspannung -Einschalten
- 10.: Synchronisierter gleitender Mittelwert des Stroms
- 11.: Synchronisierter gleitender Mittelwert der Spannung
- 12.: Startpunkt der Ansteuerung
- 13.: Verketteter Fluss
- 14.: Verlauf des Stroms
- 15.: Verlauf der Induktivität
- 16.: Änderung der Induktivität bei Bewegung der Ankerscheibe
- 17.: Verlauf der Änderung der Induktivität mit der Zeit (dL/dt)
- 18.: Lokales Maximum im Verlauf der Änderung der Induktivität
- 19.: Wendepunkt im Verlauf der Änderung der Induktivität
- I: Strom
- U: Spannung
- a: Bereich a
- b: Bereich b
- T: Bestimmungsgröße Zeit
- F: Bestimmungsgröße verketteter Fluss
- W: Beginn der Bewegung der Ankerscheibe
- Rs: Widerstand der Spule
- X: Wert des Verhältnisses
- Y: vorgegebener Wert
- L: Induktivität

## Patentansprüche

1. Verfahren zur präventiven Funktionskontrolle mindestens einer elektromagnetischen Federdruckbremse (1), die mindestens
- eine Spule (2) umfasst, sowie
- eine Ankerscheibe;
- einen Spulenträger mit hierauf verteilten Druckfedern (3);
- ein Ansteuerungsmodul; und
- ein Überwachungsmodul mit mindestens:
- einem Halbleiterbauelement;
- einem Strommessgerät;
- einem Spannungsmessgerät;
**gekennzeichnet durch** die folgenden Schritte:
(i) Ansteuerung der Federdruckbremse mit einer Spannung (U) durch das Ansteuerungsmodul;
(ii) Messung der Zustandsgrößen Strom (I) und Spannung (U) an der elektromagnetischen Federdruckbremse (1) durch das Überwachungsmodul;
(iii) Bestimmung einer Bestimmungsgröße (T; F) während der Ansteuerung der elektromagnetischen Federdruckbremse (1) durch das Überwachungsmodul;
(iv) Summierung der Bestimmungsgröße (T; F) über einen Bereich (a), der sich vom Startpunkt der Ansteuerung (12) bis zu einem Punkt (W) erstreckt, an dem sich die Ankerscheibe zu bewegen beginnt;
(v) Erfassen eines Stromwerts (I) an dem Punkt (W) an dem die Bewegung der Ankerscheibe beginnt;
(vi) Summierung der Bestimmungsgröße (T; F) über einem Bereich (b), der sich vom Punkt der Ansteuerung (12), wenn der Strom (I) wieder den Wert aus Schritt (v) erreicht, bis zu dem Punkt erstreckt, an dem ein konstanter Strom (I) erreicht wird;
(vii) Berechnung eines Verhältnisses (X) aus der Summe der Bestimmungsgröße über den Bereich (a) zur Summe der Bestimmungsgröße über den Bereich (a) und (b);
(viii) die Ausgabe eines Zustandssignals beim Erreichen oder Überschreiten eines vorgegebenen Werts (Y) durch den Wert des Verhältnisses (X).

2. Verfahren nach Anspruch 1, **dadurch gekennzeichnet, dass** die Bestimmungsgröße (T) die Zeit ist.

3. Verfahren nach Anspruch 1, **dadurch gekennzeichnet, dass** die Bestimmungsgröße (F) der verkettete Fluss ist.

4. Verfahren nach einem der vorherigen Ansprüche, **dadurch gekennzeichnet, dass** der Punkt (W), an dem sich die Ankerscheibe zu bewegen beginnt, durch nachfolgende Schritte bestimmt wird:
(i) Messung der Zustandsgröße Strom (I) und Spannung (U) an der elektromagnetischen Federdruckbremse (1) durch das Überwachungsmodul;
(ii) Berechnung einer weiteren Zustandsgröße aus der gemessenen Zustandsgröße Strom (I) und Spannung (U) und aus dem Widerstandswert der Spule (Rs) oder aus einer aus der gemessenen Zustandsgröße Strom (I) und Spannung (U) hergeleiteten Größe und aus dem Widerstandswert der Spule (Rs);
(iii) Vergleich der weiteren Zustandsgröße mit einem im Überwachungsmodul für die Bewegung der Ankerscheibe in der Federdruckbremse (1) hinterlegten vordefinierten Wert/Verlauf dieser weiteren Zustandsgröße;
(iv) Bestimmung und Ausgabe des Stromwerts an dem Punkt (W) an dem die Bewegung der Ankerscheibe beginnt.

5. Verfahren nach Anspruch 4, **dadurch gekennzeichnet, dass** die aus der gemessenen Zustandsgröße hergeleitete Größe der synchronisierte gleitende Mittelwert (10,11) oder vergleichbare Filterfunktion höherer Ordnung der gemessenen Zustandsgröße Strom (I) und Spannung (U) ist.

6. Verfahren nach Anspruch 4, **dadurch gekennzeichnet, dass** die weitere Zustandsgröße die Induktivität (L) ist.

7. Verfahren nach Anspruch 4, **dadurch gekennzeichnet, dass** die weitere Zustandsgröße die Änderung der Induktivität (dL/dt) ist.

8. Verfahren nach Anspruch 4, **dadurch gekennzeichnet, dass** die weitere Zustandsgröße die induzierte Spannung (U_{ind}) ist.

9. Verfahren nach einem der Ansprüche 1 - 8, **dadurch gekennzeichnet, dass** die elektromagnetische Federdruckbremse (1) durch das Ansteuerungsmodul mit einer Gleichspannung angesteuert wird.

10. Verfahren nach einem der Ansprüche 1 - 8, **dadurch gekennzeichnet, dass** die elektromagnetische Federdruckbremse durch das Ansteuerungsmodul mit einer pulsierenden Gleichspannung angesteuert wird.

11. Verfahren nach einem der vorherigen Ansprüche, **dadurch gekennzeichnet, dass** die elektromagnetische Federdruckbremse (1) eine gedämpfte oder ungedämpfte elektromagnetische Federdruckbremse ist.

12. Verfahren nach Anspruch 1 **dadurch gekennzeichnet, dass** der Wert (Y) bei 50% bis 80% liegt.

13. Verfahren nach Anspruch 1 **dadurch gekennzeichnet, dass** Wert (Y) bei 80% bis 90% liegt.

14. Verfahren nach Anspruch 1 **dadurch gekennzeichnet, dass** Wert (Y) bei 90% - 99% liegt

## Claims

1. A method for a preventive functional check of at least one electromagnetic spring-loaded brake (1), which comprises at least
- one coil (2), and
- an armature disc;
- a coil support with compression springs (3) distributed thereon;
- a control module; and
- a monitoring module having at least:
- a semiconductor element;
- an ammeter;
- a voltmeter;
**characterized by** the following steps:
(i) controlling the spring-loaded brake using a voltage (U) by means of the control module;
(ii) measuring the status variables current (I) and voltage (U) at the electromagnetic spring-loaded brake (1) by means of the monitoring module;
(iii) determining a parameter (T; F) during the control of the electromagnetic spring-loaded brake (1) by the monitoring module;
(iv) summing the parameter (T; F) over a range (a), which extends from the starting point of the control (12) up to a point (W) at which the armature disc begins to move;
(v) detecting a current value (I) at the point (W) at which the movement of the armature disc begins;
(vi) summing the parameter (T; F) over a range (b), which extends from the point of the control (12), when the current (I) reaches the value from step (v) again, up to the point at which a constant current (I) is achieved;
(vii) calculating a ratio (X) of the sum of the parameter over the region (a) to the sum of the parameter over the ranges (a) and (b);
(viii) outputting a status signal when the value of the ratio (X) reaches or exceeds a predetermined value (Y).

2. The method according to claim 1, **characterized in that** the parameter (T) is time.

3. The method according to claim 1, **characterized in that** the parameter (F) is the flux linkage.

4. The method according to one of the preceding claims, **characterized in that** the point (W) at which the armature disc begins to move is determined by the following steps:
(ii) measuring the status variables current (I) and voltage (U) at the electromagnetic spring-loaded brake (1) by means of the monitoring module;
(ii) calculating a further status variable from the measured status variables current (I) and voltage (U) and from the resistance value of the coil (Rs) or from a variable deduced from the measured status variables current (I) and voltage (U) and from the resistance value of the coil (Rs);
(iii) comparing the further status variable with a predefined value/course of this further status variable stored in the monitoring module for the movement of the armature disc in the spring-loaded brake (1);
(v) determining and outputting the current value at the point (W) at which the movement of the armature disc begins.

5. The method according to claim 4, **characterized in that** the variable deduced from the measured status variable is the synchronized moving average (10,11) or comparable higher order filter function of the measured status variables current (I) and voltage (U).

6. The method according to caim 4, **characterized in that** the further status variable is the inductance (L).

7. The method according to claim 4, **characterized in that** the further status variable is the change of the inductance (dL/dt).

8. The method according to claim 4, **characterized in that** the further status variable is the induced voltage (U_{ind}).

9. The method according to one of claims 1-8, **characterized in that** the electromagnetic spring-loaded brake (1) is controlled by the control module with a DC voltage.

10. The method according to one of claims 1-8, **characterized in that** the electromagnetic spring-loaded brake is controlled by the control module with a pulsating DC voltage.

11. The method according to one of the preceding claims, **characterized in that** the electromagnetic spring-loaded brake (1) is a damped or undamped electromagnetic spring-loaded brake.

12. The method according to claim 1, **characterized in that** the value (Y) is 50% to 80%.

13. The method according to claim 1, **characterized in that** the value (Y) is 80% to 90%.

14. The method according to claim 1, **characterized in that** the value (Y) is 90%-99%.

## Revendications

1. Procédé de contrôle de fonctionnement préventif d'au moins un frein à pression de ressort électromagnétique (1), qui comprend au moins
- une bobine (2), et
- un disque d'induit,
- un support de bobine avec des ressorts de pression (3) répartis dessus,
- un module de commande, et
- un module de contrôle avec au moins :
- un composant à semiconducteurs,
- un appareil de mesure de courant,
- un appareil de mesure de tension,
**caractérisé par** les étapes suivantes :
(i) commande du frein à pression de ressort avec une tension (U) par le module de commande,
(ii) mesure des grandeurs d'état Courant (I) et Tension (U) sur le frein à pression de ressort électromagnétique (1) par le module de contrôle,
(iii) détermination d'une grandeur déterminante (T, F) pendant la commande du frein à pression de ressort électromagnétique (1) par le module de commande,
(iv) totalisation de la grandeur déterminante (T, F) sur une zone (a), qui s'étend du point initial de la commande (12) jusqu'à un point (W), auquel le disque d'induit commence à se déplacer,
(v) saisie d'une valeur de courant (I) au point (W) auquel le déplacement du disque d'induit commence,
(vi) totalisation de la grandeur déterminante (T, F) sur une zone (b), ; qui s'étend du point de la commande (12), lorsque le courant (I) atteint à nouveau la valeur de l'étape (v), jusqu'au point auquel un courant constant (I) est atteint,
(vii) calcul d'un rapport (X) à partir du total de la grandeur déterminante sur la zone (a) par rapport au total de la grandeur déterminante sur la zone (a) et (b),
(viii) édition d'un signal d'état lors de 1' atteinte ou du dépassement d'une valeur prédéfinie (Y) par la valeur du rapport (X).

2. Procédé selon la revendication 1, **caractérisé en ce que** la valeur déterminante (T) est le temps.

3. Procédé selon la revendication 1, **caractérisé en ce que** la grandeur déterminante (F) est le flux enchaîné.

4. Dispositif selon l'une quelconque des revendications précédentes, **caractérisé en ce que** le point (W) auquel le disque d'induit commence à se déplacer, est déterminé par les étapes suivantes :
(i) mesure de la grandeur d'état Courant (I) et Tension (U) sur le frein à pression de ressort électromagnétique (1) par le module de contrôle,
(ii) calcul d'une autre grandeur d'état à partir de la grandeur d'état mesurée Courant (I) et Tension (U) et à partir de la valeur de résistance de la bobine (Rs) ou à partir d'une grandeur dérivée de la grandeur d'état mesurée Courant (I) et Tension (U) et à partir de la valeur de résistance de la bobine (Rs),
(iii) comparaison de l'autre grandeur d'état à une valeur/courbe prédéfinie mémorisée dans le module de commande pour le déplacement du disque d'induit dans le frein à pression de ressort (1) de cette autre grandeur d'état,
(iv) détermination et édition de la valeur de courant au point (W) auquel le déplacement du disque d'induit commence.

5. Procédé selon la revendication 4, **caractérisé en ce que** la grandeur dérivée de la grandeur d'état mesurée de la moyenne mobile synchronisée (10, 11) ou la fonction de filtrage comparable d'ordre supérieur de la grandeur d'état mesurée est le courant (I) et la tension (U).

6. Procédé selon la revendication 4, **caractérisé en ce que** l'autre grandeur d'état est l'inductance (L).

7. Procédé selon la revendication 4, **caractérisé en ce que** l'autre grandeur d'état est la variation de l'inductance (dL/dt).

8. Procédé selon la revendication 4, **caractérisé en ce que** l'autre grandeur d'état est la tension induite (U_{ind}).

9. Procédé selon l'une quelconque des revendications 1 - 8, **caractérisé en ce que** le frein à pression de ressort électromagnétique (1) est commandé par le module de commande avec une tension continue.

10. Procédé selon l'une quelconque des revendications 1 - 8, **caractérisé en ce que** le frein à pression de ressort électromagnétique est commandé par le module de commande avec une tension continue pulsante.

11. Procédé selon l'une quelconque des revendications précédentes, **caractérisé en ce que** le frein à pression de ressort électromagnétique (1) est un frein à pression de ressort électromagnétique amorti ou non amorti.

12. Procédé selon la revendication 1, **caractérisé en ce que** la valeur (Y) se situe de 50% à 80%.

13. Procédé selon la revendication 1, **caractérisé en ce que** la valeur (Y) se situe de 80% à 90%

14. Procédé selon la revendication 1, **caractérisé en ce que** la valeur (Y) se situe à 90% - 99%.
